# EUROPÄISCHE PATENTSCHRIFT

(11) **EP 0 806 307 B1**
(45) Veröffentlichungstag und Bekanntmachung des Hinweises auf die Patenterteilung: **10.01.2001**
(21) Anmeldenummer: 97107290.5
(22) Anmeldetag: 02.05.1997
(51) Int. Cl.: B60C 23/04

(54) **Luftdruck-Kontrollsystem**
Tyre pressure monitoring system
Système de surveillance de pression des pneumatiques

(30) Priorität: 09.05.1996 DE 19618659
(43) Veröffentlichungstag der Anmeldung: 12.11.1997
(73) Patentinhaber: Continental Aktiengesellschaft, 30165 Hannover (DE)
(72) Erfinder: Ernst, Gerhard, Dr., 30629 Hannover (DE)

(56) Entgegenhaltungen:
- EP-A- 0 739 761
- EP-A- 0 760 299
- DE-A- 4 205 911

## Beschreibung

Die Erfindung betrifft ein Verfahren zur Durchführung der Zuordnung der Radposition zu Luftdruckkontrollvorrichtungen in einem Luftdruckkontrollsystem eines Kraftfahrzeuges, das u.a. über folgende Bestandteile verfügt:
- eine Anzahl von Rädern, wobei jedem Rad eine Luftdruckkontrollvorrichtung zugeordnet ist, die zur Aussendung einer individuellen Kennung an eine Zentraleinheit in der Lage ist
- eine Zentraleinheit, in der die Zuordnung der Kennung einer Luftdruckkontrollvorrichtung zur Radposition für jedes Rad gespeichert ist
bei dem die Zuordnung der Luftdruckkontrollvorrichtungen zu den Radpositionen wie folgt vorgenommen wird:
- Einschalten eines Zuordnungsmodus
- Aussendung der individuellen Kennungen der Luftdruckkontrollvorrichtungen
- Auswertung in der Zentraleinheit, welche individuelle Kennung von welcher Radposition gesendet wurde
- Speicherung der ermittelten Zuordnung in der Zentraleinheit
- Ausschalten des Zuordnungsmodus und Betreiben des Luftdruckkontrollsystems in einen Drucküberwachungsmodus .

Die Erfindung betrifft ferner ein Luftdruckkontrollsystem eines Kraftfahrzeuges.

Die richtige Einstellung des Luftdrucks von Kraftfahrzeugrädern ist im Hinblick auf unterschiedliche Aspekte wichtig. Einerseits führt ein zu hoher oder ein zu niedriger Luftdruck zu einem erhöhten Reifenverschleiß, so daß die Kraftfahrzeugreifen vorzeitig ausgetauscht werden müssen, was unnötige Kosten verursacht. Andererseits birgt insbesondere ein zu niedriger Luftdruck ein erhebliches Sicherheitsrisiko in sich, da er eine erhöhte Walkarbeit der Reifenflanken verursacht, was zu einer starken Temperaturerhöhung des Kraftfahrzeugreifens führt. Infolgedessen nimmt die Festigkeit der Reifenflanken deutlich ab, was zu einem "Platzen" des Kraftfahrzeugreifens und somit insbesondere bei hohen Geschwindigkeiten zu schweren Verkehrsunfällen führen kann.

Aus den obengenannten Gründen muß der Luftdruck von Kraftfahrzeugreifen regelmäßig überprüft werden, was von dem Kraftfahrzeugführer aus unterschiedlichen Gründen häufig versäumt wird. Deshalb sind bereits Luftdruckkontrollsysteme entwickelt worden, die jedem Rad zugeordnet eine Luftdruckkontrollvorrichtung enthalten, die den Luftdruck von Kraftfahrzeugreifen automatisch messen und zumindest eine kritische Abweichung von einem Solluftdruck dem Kraftfahrzeugführer melden. Die Luftdruckkontrollvorrichtungen können z.B. in den Reifen einvulkanisiert oder eingeklebt sein oder auch am oder im Ventil bzw. an oder in der Felge befestigt sein. Entsprechende Ausbildungen sind bekannt.

Aus der DE 42 05 911 A1 ist ein Luftdruckkontrollsystem bekannt, welches einerseits die Verfahrensmerkmale des Oberbegriffs des Anspruchs 1, und auch die gegenständlichen Merkmale des Oberbegriffs des Anspruch 7 zeigt, und bei dem jedem Reifen des Kraftfahrzeuges jeweils eine Luftdruckkontrollvorrichtung zugeordnet ist. Jede Luftdruckkontrollvorrichtung übermittelt in regelmäßigen Abständen ein gemessenes Drucksignal zusammen mit einer individuellen Kennung an eine Zentraleinheit. Die Übermittlung einer individuellen Kennung zusammen mit dem Drucksignal ist deswegen besonders wichtig, weil bei dem aus der DE 42 05 911 A1 bekannten Luftdruckkontrollsystem berührungslos Daten vom Reifen zum Kraftfahrzeug übermittelt werden. Es muß daher beispielsweise ausgeschlossen werden, daß z.B. im Stau Luftdruckdaten eines benachbarten Kraftfahrzeugs empfangen werden und es aufgrund dieser Daten zu Fehlmeldungen an den Kraftfahrzeugführer kommt. Dies wird durch die individuellen Kennungen ermöglicht, da die Reifen eines anderen Kraftfahrzeuges naturgemäß andere individuelle Kennungen senden. In der Zentraleinheit sind Wertepaare der Form (Kennung der Luftdruckkontrollvorrichtung/Radposition) für jedes Rad des Kraftfahrzeuges gespeichert, so daß durch entsprechenden Vergleich in der Zentraleinheit darauf geschlossen werden kann, welche Kennung mit dem dazugehörigen Drucksignal von welcher Radposition des Kraftfahrzeuges gesendet wird. Eine Abweichung des übermittelten Drucksignals von einem vergebenen Wert an einer Radposition wird dem Kraftfahrzeugführer von der Zentraleinheit angezeigt, so daß dieser geeignete Maßnahmen einleiten kann.

Die Ausführungen zeigen, daß das aus der DE 42 05 911 A1 bekannte Luftdruckkontrollsystem nur dann einwandfrei funktionieren kann, wenn in der Zentraleinheit die Zuordnungen (Kennung der Luftdruckkontrollvorrichtung/Radposition) richtig gespeichert sind. Dementsprechend muß einerseits sichergestellt sein, daß sich diese Zuordnung während des Betriebes des Kraftfahrzeuges nicht ändert und andererseits muß eine neue Zuordnung nach jedem Reifenwechsel am Kraftfahrzeug vorgenommen werden. Um diesen beiden Randbedingungen zu genügen, ist in dem aus der DE 42 05 911 A1 bekannten Luftdruckkontrollsystem ein manuell zu betätigender Schalter vorgesehen, der nur im Stillstand des Kraftfahrzeugs umlegbar ist und das Luftdruckkontrollsystem nach einem Reifenwechsel von einem Drucküberwachungsmodus in einen Zuordnungsmodus überführt. In dem Zuordnungsmodus findet eine Zuordnung der neuen Kraftfahrzeugreifen mit den darin enthaltenden neuen Luftdruckkontrollvorrichtungen zu den Radpositionen statt, z.B. dadurch, daß die Intensität der von den einzelnen Luftdruckkontrollvorrichtungen gesendeten Signale von den Radpositionen zugeordneten Empfängern gemessen wird und jedes von einer Luftdruckkontrollvorrichtung ausgesendete Signal der Radposition des Kraftfahrzeugreifens zugeordnet wird, an welcher es die höchste Signalintensität erzeugt (beispielsweise wird die Signalintensität der Luftdruckkontrollvorrichtung, die sich in Reifen vorne links befindet, an dem Empfänger am größten sein, der der Radposition vorne links zugeordnet ist, so daß eine entsprechende Zuordnung festgestellt werden kann). Die entsprechenden Zuordnungen werden in der Zentraleinheit gespeichert. Nach Beendigung der Zuordnung wird der Schalter wiederum mauell umgelegt, so daß sich das Luftdruckkontrollsystem wieder in seinem Drucküberwachungsmodus befindet.

Durch die Vorsehung des manuell zu betätigenden Schalters ist sichergestellt, daß sich die Zuordnung während des Betriebes des Kraftfahrzeuges nicht ändert, da der Schalter des Kraftfahrzeuges nicht umgelegt werden kann. Es besteht jedoch die Gefahr, daß das manuelle Umschalten von dem Druchküberwachungsmoduns in den Zuordnungsmodus nach einem Reifenwechsel vergessen und somit eine neue Zuordnung in der Zentraleinheit nicht gespeichert wird. In diesem Fall ist das Luftdruckkontrollsystem nicht mehr funktionstüchtig und ein zu niedriger Druck wird nicht mehr gemeldet. Die Sicherheit des Kraftfahrzeuges ist dann deutlicht eingeschränkt. Diese Gefahr ist dann besonders groß, wenn der Reifenwechsel von einer ungeschulten Person, beispielsweise von dem Kraftfahrzeugführer nach einer Reifenpanne etc., durchgeführt wird.

Der Erfindung liegt die Aufgabe zugrunde, ein Verfahren zur Durchführung der Zuordnung von Luftdruckkontrollvorrichtungen zu den Radpositionen zu schaffen, das das oben geschilderte Sicherheitsrisiko ausschließt. Der Erfindung liegt ferner die Aufgabe zugrunde, ein Luftdruckkontrollsystem zur Durchführung des Verfahrens zu schaffen.

Bei einem Verfahren der eingangs genannten Art wird die Aufgabe gemäß den kennzeichnenden Merkmale des Anspruchs 1 dadurch gelöst, daß
- vor oder bei Inbetriebnahme des Kraftfahrzeuges der Zuordnungsmodus dem Drucküberwachungsmodus automatisch zugeschaltet wird.
- die Zuordnung der Luftkontrollvorrichtungen zu den Radpositionen im Betrieb des Kraftfahrzeuges erfolgt und daß
- nach abgeschlossener Zuordnung der Zuordnungsmodus automatisch verlassen wird.

Ein Einschalten des Zuordnungsmodus bei der Inbetriebnahme des Kraftfahrzeuges kann beispielsweise durch Einschalten der Zündung bzw. bei Betätigung des Anlassers erfolgen. Die Zuordnung der einzelnen Luftdruckkontrollvorrichtungen zu den Radpositionen kann beispielsweise so vorgenommen werden, wie es oben bereits im Zusammenhang mit der DE 42 05 911 A1 erläutert worden ist. Weiter unten wird ausführlich erläutert, wie die Zuordnung alternativ erfolgen kann.

Gemäß dem nebengeordneten Sachanspruch 7 wird die Aufgabe bei einem Luftdruckkontrollsystem der eingangs erläuterten Art dadurch gelöst, daß das Luftdruckkontrollsystem derart ausgebildet ist, daß
- vor oder bei der Inbetriebnahme des Kraftfahrzeuges der Zuordnungsmodus dem Drucküberwachungsmodus automatisch zuschaltbar ist und daß
- nach abgeschlossener Zuordnung der Zuordnungsmodus automatisch abschaltbar und das Luftdruckkontrollsystem ausschließlich in dem Drucküberwachungsmodus betreibbar ist.

Zur Ausführung der Schaltvorgänge enthält die Zentraleinheit des Luftdruckkontrollsystems bevorzugt einen Mikroprozessor, in dem jeweils ein Unterprogramm für den Drucküberwachungsmodus und den Zuordnungsmodus gespeichert ist. Durch Einschalten der Zündung des Kraftfahrzeuges wird das Unterprogramm "Zuordnungsmodus" aufgerufen und durchgeführt. Dabei wird das Unterprogramm "Zuordnungsmodus" dem Unterprogramm "Drucküberwachungsmodus" zugeschaltet und in einer "Pause" des Unterprogramms "Drucküberwachungsmodus" abgearbeitet. Dies ist deshalb möglich, da nur in Zeitabständen, z.B. ca. alle 30 Sekunden Druckwerte an die Zentraleinheit übermittelt und von dieser ausgewertet werden und zwischen den Übermittlungen die genannten Pausen entstehen. Ein Zuschalten des Zuordnungsmodus zu dem Drucküberwachungsmodus ist deshalb besonders vorteilhaft, da dann im Drucküberwachungsmodus bei zugeschaltetem Zuordnungsmodus zumindest noch extreme Druckabweichungen an den Kraftfahrzeugfahrer gemeldet werden können, die zu einer Gefährdung führen könnten. Hierbei werden zugunsten der Sicherheit des Kraftfahrzeuges Fehlmeldungen aufgrund der noch nicht erfolgten Zuordnung in Kauf genommen. Nach erfolgter Zuordnung wird das Unterprogramm "Zuordnungsmodus" abgeschaltet und nur noch das Unterprogramm "Drucküberwachungsmodus" durchgeführt.

Der Grundgedanke der Erfindung ist darin zu sehen, daß die Zuordnung der Luftdruckkontrollvorrichtungen zu den Radpositionen im Betrieb des Kraftfahrzeuges vorgenommen wird. Die Erfindung macht sich die an sich einfache Erkenntnis zunutze, daß im Betrieb des Kraftfahrzeuges ein Reifenwechsel nicht durchgeführt werden kann, so daß ein Reifenwechsel während der letzten-Stillegung des Kraftfahrzeuges auf jeden Fall erfaßt ist. Diese an sich einfache Erkenntnis erlaubt eine Automatisierung des Verfahrens und somit weist die Erfindung in die entgegengesetzte Richtung als der eingangs zitierte Stand der Technik.

Die mit der Erfindung erzielten Vorteile sind insbesondere darin zu sehen, daß das Verfahren automatisch durchführbar ist und somit ein manuelles Umschalten von einem Drucküberwachungsmodus in einen Zuordnungsmodus entfällt. Durch das erfindungsgemäße Verfahren wird ferner die Sicherheit des Kraftfahrzeuges erheblich gesteigert, da bei einer automatischen Durchführung des Verfahrens ein Einschalten des Zuordnungsmodus nicht vergessen werden kann. Ein weiterer Vorteil der Erfindung ist darin zu sehen, daß bei der automatischen Durchführung des Verfahrens Fehlbedienungen seitens einer Bedienperson ausgeschlossen sind. Schließlich wird durch die Automatisierung des Verfahrens der Bedienungskomfort des Luftdruckkontrollsystems erhöht.

Gemäß einem Ausführungsbeispiel der Erfindung nach Anspruch 2 wird das Verfahren bei jeder Inbetriebnahme des Kraftfahrzeuges durchgeführt. Dadurch ist sichergestellt, daß ein zwischen der letzten Stillegung und der nächsten Inbetriebnahme des Kraftfahrzeuges durchgeführter Reifenwechsel auf jeden Fall erfaßt und eine neue Zuordnung der in den neuen Reifen enthaltenen Luftdruckkontrollvorrichtungen zu den Radpositionen durchgeführt wird.

Gemäß einem alternativen Ausführungsbeispiel der Erfindung nach Anspruch 3 wird das Verfahren immer dann durchgeführt, wenn das Kraftfahrzeug länger als einen vorgegebenen Zeitraum stillsteht. Ein vorgegebener Zeitraum kann beispielsweise durch ein Zeitglied in der Zentraleinheit erfaßt werden. Der Vorteil dieses Ausführungsbeispiels ist darin zu sehen, daß das Verfahren nicht nach jeder Stillegung des Kraftfahrzeuges durchgeführt wird, sondern nur dann, wenn die Dauer der Stilllegung einen vorgegebenen Zeitraum überschreitet. Bevorzugt wird der vorgegebene Zeitraum so lang gewählt, daß innerhalb dieses Zeitraumes ein Reifenwechsel ausgeschlossen ist. Als ein solcher Zeitraum können beispielsweise ca. 5 - 30 Minuten angenommen werden. Der Vorteil dieses Ausführungsbeispiels ist darin zu sehen, daß eine neue Zuordnung nur relativ selten vorgenommen wird und somit in den meisten Fällen bereits bei Fahrtantritt die aktuelle Zuordnung in der Zentraleinheit gespeichert ist.

Gemäß einer Weiterbildung der Erfindung nach Anspruch 4 geschieht die Zuordnung der Luftdruckkontrollvorrichtungen zu den Radpositionen im Zuordnungsmodus wie folgt:
- an jedem Rad des Kraftfahrzeuges wird mit ersten Meßvorrichtungen, von denen jeweils eine der entsprechenden Luftdruckkontrollvorrichtung des jeweiligen Reifens zugeordnet ist, eine Größe gemessen, die zumindest zeitweise für jedes Rad des Kraftfahrzeuges einen charakteristischen Wert annimmt
- die gleiche Größe wird an jedem Rad des Kraftfahrzeuges mit zweiten Meßvorrichtungen gemessen, die jeweils ortsfest und einer Radposition zugeordnet an dem Kraftfahrzeug befestigt sind, wobei die Zuordnung der zweiten Meßvorrichtungen zu den Radpositionen der Zentraleinheit bekannt ist
- die von den ersten Meßvorrichtungen gemessenen Größen werden zusammen mit den individuellen Kennungen der Luftdruckkontrollvorrichtungen an die Zentraleinheit übermittelt
- die von den zweiten Meßvorrichtungen gemessenen Werte werden ebenfalls an die Zentraleinheit übermittelt, so daß in der Zentraleinheit Wertpaare der Form (gemessener Wert/Radposition) vorliegen
- die von den ersten Meßvorrichtungen gemessenen Werte werden mit den von den zweiten Meßvorrichtungen gemessenenen Werten verglichen, wobei bei genügender Übereinstimmung der Meßwerte darauf geschlossen wird, daß die zusammen mit dem ersten Meßwert übermittelte Kennung zu der Radposition gehört, an der von einer zweiten Meßvorrichtung ein Meßwert mit genügender Übereinstimmung gemessen wurde wie von einer ersten Meßvorrichtung
- die erhaltene Zuordnung der Kennung einer Luftdruckkontrollvorrichtung zur Radposition wird in der Zentraleinheit gespeichert.

Hierbei ist hier und im folgenden unter genügender Übereinstimmung zu verstehen, daß die Meßwerte bis auf meßtechnisch nicht zu vermeidende Ungleichheiten übereinstimmen und somit eine eindeutige Zuordnung möglich ist. Der Vorteil dieser Weiterbildung ist insbesondere darin zu sehen, daß auf aufwendige Radhausantennen verzichtet werden kann, die bei dem aus der DE 42 05 911 A1 bekannten Zuordnungsverfahren notwendig sind, um die Signalintensitäten der von den Luftdruckkontrollvorrichtungen ausgesendeten Signalen mit ausreichender Genauigkeit zu messen, wodurch das Luftdruckkontrollsystem preiswerter wird.

Es hat sich gezeigt, daß eine Messung, die auf "radindividuellen Größen" basiert, in einem recht kurzen Zeitraum durchzuführen ist, da an den Kraftfahrzeugrädern aus unterschiedlichen Gründen fast immer individuelle Meßwerte vorliegen. Als geeignete Meßgröße hat sich beispielsweise die Raddrehzahl (Umdrehungen/Zeit) bzw. jede Meßgröße, aus der die Raddrehzahl hergeleitet werden kann, erwiesen, die sowohl von den Sensoren, die den Luftdruckkontrollvorrichtungen zugeordnet sind, als auch von Sensoren, die jedem Rad des Kraftfahrzeuges fest zugeordnet sind, gemessen werden. Die Raddrehzahl der einzelnen Räder des Kraftfahrzeuges unterscheidet sich beispielsweise bei Kurvenfahrten, aber auch bei Geradeausfahrten liegen bereits, z.B. aufgrund unterschiedlicher Abnutzung oder aufgrund von Fertigungstoleranzen, individuelle Raddrehzahlen vor, die für eine Zuordnung der Luftdruckkontrollvorrichtungen zu den Radpositionen ausreichend sind.

Als geeignete Sensoren, die den Luftdruckkontrollvorrichtungen zugeordnet werden und der Erfassung der Raddrehzahl dienen, haben sich z.B. Magnetfeldsensoren, Fliehkraftsensoren, Schwerkraftsensoren und Beschleunigungssensoren erwiesen. Als besonders geeignet haben sich Schwerkraftsensoren erwiesen, bei denen eine kleine Masse in einem piezoelektrisch wirkenden Element eine raddrehsynchrone Ladungsverschiebung erzeugt. Beispielsweise wird in einem derartigen Element immer dann durch den einwirkenden Druck eine Ladungsverschiebung erzeugt, wenn ein Reifen des Kraftfahrzeuges und damit das in ihm enthaltene Element den Bodenaufstandspunkt des Reifens durchläuft. Die Anzahl der erzeugten Ladungsverschiebungszyklen wird in einer Auswerteschaltung des Sensors gezählt. Gleichzeitig wird mit Hilfe eines in der Auswerteschaltung enthaltenen Zeitgliedes die Zeit gemessen. Die Raddrehzahl (Umdrehungen/Zeit) kann in der Auswerteschaltung nun ermittelt werden, indem festgestellt wird, wieviel Umdrehungen das Rad mit dem entsprechenden Sensor in einem fest vorgegebenen Zeitraum gemacht hat bzw. welcher Zeitraum für eine fest vorgegebene Anzahl von Umdrehungen benötigt wird.

Als Sensoren, die die Raddrehzahl messen und die den einzelnen Rädern des Kraftfahrzeuges fest zugeordnet sind, können beispielsweise die Sensoren eines Antiblockiersystems verwendet werden, das bei vielen Kraftfahrzeugen ohnehin vorhanden ist, so daß zusätzliche Sensoren nicht benötigt werden.

Alternativ zu den Raddrehzahlen kann durch die ersten und zweiten Meßvorrichtungen auch die Geräuschentwicklung, das Schwingungsverhalten oder die Reifentemperatur an den einzelnen Kraftfahrzeugrädern gemessen werden. Auch hier hat es sich gezeigt, daß die entsprechenden Meßgrößen eine "ausreichende Individualität" aufweisen. Zur Messung der genannten Größen sind entsprechende Sensoren bekannt, so daß diese Sensoren hier nicht näher erläutert werden sollen.

Zusammenfassend ist festzustellen, daß durch das erfindungsgemäße Verfahren die Zuordnung der Luftdruckkontrollvorrichtungen zu den Radpositionen automatisch durchführbar ist. Hierbei ist ausgeschlossen, daß ein Reifenwechsel nicht erfaßt wird, da das Verfahren unmittelbar nach jeder Inbetriebnahme bzw. immer dann durchgeführt wird, wenn das Fahrzeug so lange stillstand, daß ein Reifenwechsel durchgeführt sein könnte.

Weitere Vorteile und ein Ausführungsbeispiel der Erfindung werden im Zusammenhang mit der nachstehenden Figur erläutert, die ein Kraftfahrzeug mit einem Luftdruckkontrollsystem zeigt.

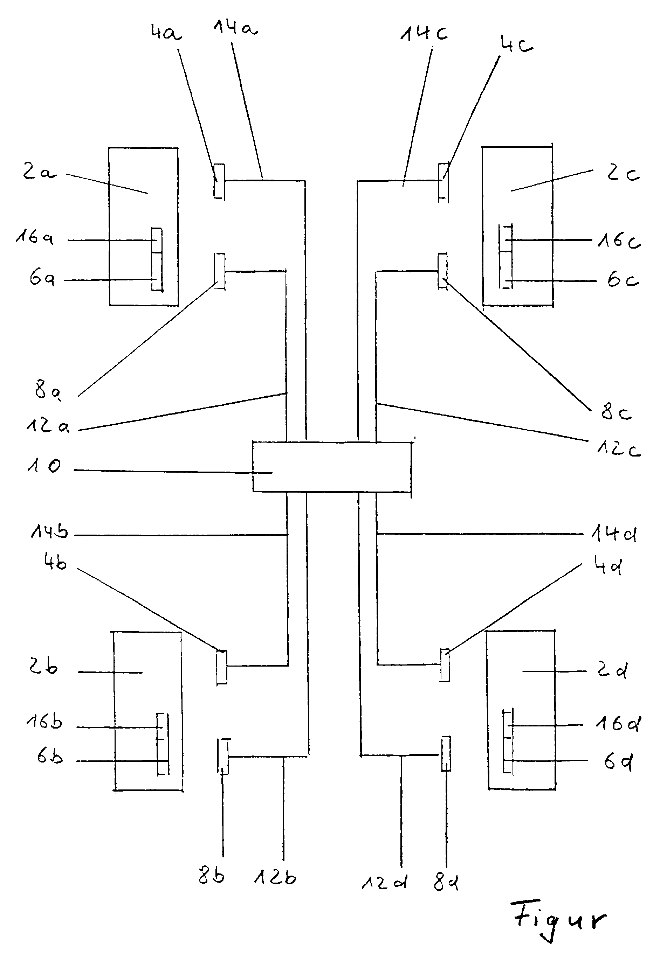

Die Figur zeigt ein Kraftfahrzeug mit Rädern 2a bis 2d, das über ein Luftdruckkontrollsystem verfügt. Das Luftdruckkontrollsystem enthält u.a. Luftdruckkontrollvorrichtungen 6a bis 6d, von denen jeweils eine in den Reifen der Kraftfahrzeugräder 2a bis 2 d enthalten ist, (z.B. im Reifengummi bzw. im oder am Ventil) oder von denen jeweils eine einem Reifen zugeordnet ist, z.B. durch entsprechende Positionierung und Befestigung an der Felge. Die Luftdruckkontrollvorrichtungen 6a bis 6d verfügen über einen Sender, mit Hilfe dessen sie Daten an die den Luftdruckkontrollvorrichtungen 6a bis 6d zugeordneten Empfänger 8a bis 8d berührungslos übermitteln können. Darüber hinaus verfügen die Luftdruckkontrollvorrichtungen 6a bis 6d über Sensoren 16a bis 16d, deren Funktion später erläutert wird. Die Empfänger 8a bis 8d übermitteln die von den Luftdruckkontrollvorrichtungen 6a bis 6d empfangenen Daten über Übertragungswege 12a bis 12d an eine Zentraleinheit 10. Die Empfänger 8a bis 8d können auch durch einen einzigen Empfänger ersetzt werden, der beispielsweise in der Zentraleinheit 10 angeordnet ist und die Signale aller Luftdruckkontrollvorrichtungen 6a bis 6d empfängt. In diesem Fall kann auf die Übertragungswege 12a bis 12d von den Empfängern 8a bis 8d zu der Zentraleinheit verzichtet werden. Im einfachsten Fall sind die Empfänger 8a bis 8d bzw. der einzige Empfänger als Empfangsantennen ausgebildet.

Das Luftdruckkontrollsystem enthält neben den Sensoren 16a bis 16d Sensoren 4a bis 4d, die an dem Kraftfahrzeug befestigt sind und jeweils einem Rad 2a bis 2d des Kraftfahrzeuges fest zugeordnet sind. Die Sensoren 4a bis 4d stehen über Übertragungswege 14a bis 14d ebenfalls mit der Zentraleinheit 10 in Verbindung.

Im Folgenden wird die Funktionsweise des Luftdruckontrollsystems erläutert. Vor oder bei der Inbetriebnahme wird automatisch der Zuordnungsmodus des Luftdruckkontrollsystems eingeschaltet. Dies kann beispielsweise dadurch geschehen, daß durch Einschalten der Zündung in einem Mikroprozessor der Zentraleinheit 10 ein Unterprogramm "Zuordnungsmodus" aufgerufen wird, das daraufhin "abgearbeitet" wird und die Zuordnung steuert. In dem Zuordnungsmodus werden sowohl von den Sensoren 16a bis 16d, die den Luftdruckkontrollvorrichtungen 6a bis 6d zugeordnet sind, als auch von den Sensoren 4a bis 4d Meßgrößen, die im Betrieb des Kraftfahrzeuges zumindest zeitweise für jedes Kraftfahrzeugrad 2a bis 2d des Kraftfahrzeuges individuell sind, aufgenommen und in der Zentraleinheit 10 ausgewertet. Im folgenden Beispiel wird davon ausgegangen, daß es sich hierbei um die Raddrehzahl der einzelnen Kraftfahrzeugräder 2a bis 2d handelt und die Sensoren 16a bis 16d und 4a bis 4d dementsprechend als Drehzahlsensoren ausgebildet sind. Die von den Sensoren 16a bis 16d gemessenen Raddrehzahlen werden zusammen mit den individuellen Kennungen der Luftdruckkontrollvorrichtungen 6a bis 6d und den Druckwerten sowie ggf. weiteren Meßwerten an die Empfänger 8a bis 8d und von dort über die Übertragungswege 12a bis 12d an die Zentraleinheit 10 übermittelt. In der Zentraleinheit 10 liegen also für jedes Kraftfahrzeugrad 2a bis 2d Wertepaare der Form (individuelle Kennung einer Luftdruckkontrollvorrichtung/Raddrehzahl) vor, wobei von diesen Wertepaaren noch nicht bekannt ist, von welcher Radposition aus sie gesendet worden sind.

Die von den Sensoren 4a bis 4d gemessenen Raddrehzahlen werden über die Übertragungswege 14a bis 14d ebenfalls an die Zentraleinheit 10 übermittelt. Da die Sensoren 4a bis 4d den einzelnen Rädern 2a bis 2d des Kraftfahrzeuges fest zugeordnet sind, "weis" die Zentraleinheit, an welcher Radposition die entsprechende Raddrehzahl gemessen worden ist (aufgrund der festen Zuordnung weis die Zentraleinheit 10 beispielsweise, daß der Sensor 4a die Raddrehzahl des vorderen linken Kraftfahrzeugrades 2a sendet usw.).

In der Zentraleinheit 10 werden alle von den Sensoren 16a bis 16d der Luftdruckkontrollvorrichtungen 6a bis 6d übermittelten Raddrehzahlen mit allen von den Sensoren 4a bis 4d übermittelten Raddrehzahlen verglichen. Eine feste Zuordnung einer Luftdruckkontrollvorrichtung 6a bis 6d zu einer Radposition wird in der Zentraleinheit dann vorgenommen, wenn die von einem Sensor 16a bis 16d gemessene Raddrehzahl mit der von einem der Sensoren 4a bis 4d gemessenen Raddrehzahl genügend genau übereinstimmt. Die entsprechende Zuordnung (individuelle Kennung einer Luftdruckkontrollvorrichtung/Radposition) wird dann in der Zentraleinheit 10 gespeichert (beispielsweise liegt eine Übereinstimmung der gemessenen Raddrehzahlen vor, wenn die von dem Sensor 16a gemessene Raddrehzahl mit der von dem Sensor 4a gemessenen Raddrehzahl verglichen wird; die Zentraleinheit "weis", daß die entsprechenden gemessenen Raddrehzahlen von dem Kraftfahrzeugrad 2a vorne links stammen, da der Sensor 4a dieser Radposition vorne links fest zugeordnet ist. Dementsprechend ordnet die Zentraleinheit 10 die von der Luftdruckkontrollvorrichtung 6a übermittelteindividuelle Kennung der Radposition vorne links des Kraftfahrzeugrades 2a zu und speichert diese ab. Entsprechend wird mit den anderen Radpositionen verfahren. Sind auf diese Art und Weise alle entsprechenden Zuordnungen erstellt und abgespeichert, ist die Zuordnung abgeschlossen, und der Zuordnungsmodus wird automatisch verlassen. Dies kann beispielsweise wiederum dadurch geschehen, daß nach der Abspeicherung der Zuordnungen das Unterprogramm "Zuordnungsmodus" eines Mikroprozessors der Zentraleinheit 10 verlassen wird.

Beispiel: Von den vier Luftdruckkontrollvorrichtungen 6a bis 6d gelangen an die Zentraleinheit 10 die Wertereihen (K₁; 100; 2,0); (K₂; 115; 2,0); (K₃; 105; 2,2); (K₄; 120; 2,2), wobei Kᵢ i = 1...4 jeweils die Kennung, der mittlere Wert in jeder Klammer jeweils die Raddrehzahl und der letzte Wert in den Klammern jeweils den Druck bedeuten. Die Zentraleinheit 10 "weis" zunächst nicht, von welcher Radposition welche Wertereihe stammt. Zusätzlich gelangen von den Drehzahlsensoren 4a bis 4d die gemessenen Raddrehzahlen an die Zentraleinheit 10, nämlich in diesem Fall zum Beispiel 98 von dem Sensor 4a, 113 von dem Sensor 4c, 105 von dem Sensor 4b und 122 von dem Sensor 4d. Die Zentraleinheit 10 "weis" aufgrund der festen Zuordnung der Sensoren 4a bis 4d zu den Radpositionen, daß die Drehzahl 98 an dem Rad 2a vorne links, die Drehzahl 113 an dem Rad 2c vorne rechts, die Drehzahl 105 an dem Rad 2b hinten links und die Drehzahl 122 an dem Rad 2d hinten rechts gemessen wurde. Durch Vergleich der von den Luftdruckkontrollvorrichtungen 6a bis 6d gemessenen Raddrehzahlen mit den von den Sensoren 4a bis 4d gemessenen Raddrehzahlen kann die Zentraleinheit 10 nun die die individuellen Kennungen Kᵢ, i = 1...4 den Radpositionen zuordnen, insbesondere bei diesem Beispiel also folgende Zuordnungen treffen: (K₁; Radposition "Vorne links" des Rades 2a); (K₂; Radposition "Vorne rechts" des Rades 2c); (K₃; Radposition "Hinten links" des Rades 2b); (K₄; Radposition "Hinten rechts" des Rades 2d), da an den entsprechenden Rädern die beste Übereinstimmung zwischen den unabhängig voneinander gemessenen Radrehzahlen besteht. Die entsprechenden Zuordnungen werden in der Zentraleinheit 10 gespeichert und im Drucküberwachungsmodus verwendet. Kann eine eindeutige Zuordnung auf Basis der gemessenen Werte nicht durchgeführt werden, z.B. weil an zwei oder mehr Rädern 2a bis 2d von den Sensoren 4a bis 4d gleiche Raddrehzahlen gemessen werden, so wird der Zuordnungsmodus fortgesetzt, bis dies möglich ist.

Durch die im Zuordnungsmodus übermittelten Druckwerte wird nur dann eine Warnung ausgelöst, wenn ein bestimmter Mindestdruckwert von z.B. 1,2 bar unterschritten wird.

Im Drucküberwachungsmodus funktioniert das Luftdruckkontrollsystem wie bekannt. Das heißt, von den Luftdruckkontrollvorrichtungen 6a bis 6d werden individuelle Kennungen zusammen mit gemessenen Druckwerten und ggf. weiteren Meßwerten sowie Werten der Raddrehzahl an die Empfänger 8a bis 8d übermittelt und von dort an die Zentraleinheit 10 weitergegeben. In der Zentraleinheit 10 werden die übermittelten individuellen Kennungen mit den gespeicherten Kennungen verglichen und bei Übereinstimmung wird ermittelt, von welcher Radposition die individuelle Kennung mit dem dazugehörigen Druckwert gesendet worden ist. Die Raddrehzahlen werden von der Zentraleinheit 10 im Drucküberwachungsmodus nicht ausgewertet. Weicht der übermittelte Druckwert oder eine der anderen Meßgrößen an einem der Kraftfahrzeugräder 2a bis 2d in unzulässiger Weise von einem vorgegebenen Wert ab, so wird dies dem Kraftfahrzeugführer gemeldet, so daß er entsprechende Maßnahmen einleiten kann. Beispiel: Von den Luftdruckontrollvorrichtungen 6a bis 6d werden wiederrum Wertereihen der Form (K₁; 150; 1,5); (K₂; 153; 2,0); (K₃; 149; 2,2); (K₄; 147; 2,2) an die Zentraleinheit 10 übermittelt. Aufgrund der gespeicherten Zuordnungen (s. oben) kann die Zentraleinheit 10 ermitteln, daß die erste Wertereihe von der Radposition "Vorne links", die zweite Wertereihe von der Radposition "Vorne rechts", die dritte Wertereihe von der Radposition "Hinten links" und die vierte Wertereihe von der Radposition "Hinten rechts" übermittelt wurde, da die entsprechenden individuellen Kennungen in der übermittelten Wertereihe und der gespeicherten Zuordnung bei diesen angegebenen Radpositionen übereinstimmen. Die Zentraleinheit 10 kann nun feststellen, daß der Druck von 1,5 bar an der Radposition "Vorne links" der Druck von 2,0 bar an der Radposition "Vorne rechts" und der Druck von 2,2 jeweils an den Radpositionen "Hinten links" und "Hinten rechts" gemessen wurde. Gegebenenfalls kann eine Warnung abgegeben werden, wenn einer der gemessenen Luftdrücke von einem vorgegebenen Wert abweicht. Im genannten Beispiel wird eine Warnung abgegeben, da der Luftdruck von 1,5 bar an der Radposition "Vorne links" zu niedrig ist.

### Bezugszeichenliste

- 2a - 2d: Kraftfahrzeugrad
- 4a - 4d: Sensor, der Radposition fest zugeordnet ist
- 6a - 6d: Luftdruckkontrollvorrichtung mit Sensor
- 8a - 8d: Empfänger
- 10: Zentraleinheit
- 12a - 12d: Übertragungsweg von Empfänger 8a - 8d zur Zentraleinheit 10
- 14a - 14d: Übertragungsweg von Sensor 4a - 4d zur Zentraleinheit 10
- 16a - 16d: Sensoren der Luftdruckkontrollvorrichtungen 6a - 6d

## Patentansprüche

1. Verfahren zur Durchführung der Zuordnung der Radposition zu Luftdruckkontrollvorrichtungen (6a - 6b) in einem Luftdruckkontrollsystem eines Kraftfahrzeuges, das u.a. über folgende Bestandteile verfügt:
- eine Anzahl von Rädern (2a - 2d), wobei jedem Rad (2a - 2d) eine Luftdruckkontrollvorrichtung (6a - 6d) zugeordnet ist, die zur Aussendung einer individuellen Kennung an eine Zentraleinheit (10) in der Lage ist
- eine Zentraleinheit (10), in der die Zuordnung der Kennung einer Luftdruckkontrollvorrichtungen (6a 6d) zur Radposition für jedes Rad (2a - 2d) gespeichert wird
bei dem die Zuordnung der Luftdruckkontrollvorrichtungen (6a - 6d) zu den Radpositionen wie folgt vorgenommen wird:
- Einschalten eines Zuordnungsmodus
- Aussendung der individuellen Kennungen der Luftdruckkontrollvorrichtungen (6a - 6d)
- Auswertung in der Zentraleinheit (10), welche individuelle Kennung von welcher Radposition gesendet wurde
- Speichern der ermittelten Zuordnungen in der Zentraleinheit (10)
- Ausschalten des Zuordnungsmodus und Betreiben des Luftdruckkontrollsystems in einen Drucküberwachungsmodus
**dadurch gekennzeichnet**, daß
- vor oder bei Inbetriebnahme des Kraftfahrzeuges der Zuordnungsmodus dem Drucküberwachungsmodus automatisch zugeschaltet wird
- die Zuordnung der Luftdruckkontrollvorrichtung zu den Radpositionen im Betrieb des Kraftfahrzeuges erfolgt und daß
- nach abgeschlossener Zuordnung der Zuordnungsmodus automatisch verlassen wird.

2. Verfahren zur Durchführung der Zuordnung der Radposition zu Luftdruckkontrollvorrichtungen (6a - 6d) nach Anspruch 1, dadurch gekennzeichnet, daß das Verfahren bei jeder Inbetriebnahme des Kraftfahrzeuges durchgeführt wird.

3. Verfahren zur Durchführung der Zuordnung der Radposition zu Luftdruckkontrollvorrichtungen nach Anspruch 1, dadurch gekennzeichnet, daß das Verfahren immer dann durchgeführt wird, wenn das Kraftfahrzeug länger als einen vorgegebenen Zeitraum stillsteht.

4. Verfahren zur Durchführung der Zuordnung der Radposition zu Luftdruckkontrollvorrichtungen (6a - 6d) nach einem der Ansprüche 1 bis 3, dadurch gekennzeichnet, daß die Zuordnung der Luftdruckkontrollvorrichtungen (6a - 6d) zu den Radpositionen wie folgt durchgeführt wird:
- Messung einer Größe an jedem Rad des Kraftfahrzeuges, die zumindest zeitweise für jedes Rad des Kraftfahrzeuges einen charakteristischen Wert annimmt, mit ersten Meßvorrichtungen (16a - 16d), von denen jeweils eine der entsprechenden Luftdruckkontrollvorrichtung (6a - 6d) des jeweiligen Rades (2a - 2d) zugeordnet ist
- Messung der gleichen Größe an jedem Rad (2a - 2d) des Kraftfahrzeuges mit zweiten Meßvorrichtungen (4a - 4d), die jeweils ortsfest und einer Radposition (2a - 2d) zugeordnet an dem Kraftfahrzeug befestigt sind, wobei die Zuordnung der zweiten Meßvorrichtungen (4a - 4d) zu den Radpositionen der Zentraleinheit (10) bekannt ist
- Übermittlung der von den ersten Meßvorrichtungen (16a - 16d) gemessenen Größen zusammen mit den individuellen Kennungen der Luftdruckkontrollvorrichtungen (6a - 6d) an die Zentraleinheit (10)
- Übermittlung der von den zweiten Meßvorrichtungen (4a - 4d) gemessenen Werte an die Zentraleinheit (10)
- Vergleichen der von den ersten Meßvorrichtungen (16a - 16d) gemessenen Werte mit den von den zweiten Meßvorrichtungen (4a - 4d) gemessenen Werte, wobei bei genügender Übereinstimmung der Meßwerte darauf geschlossen wird, daß die zusammen mit dem ersten Meßwert übermittelte Kennung zu der Radposition gehört, an der von einer zweiten Meßvorrichtung (4a - 4d) ein Meßwert mit genügender Übereinstimmung gemessen wurde wie von einer ersten Meßvorrichtung (16a - 16d)
- Speichern der Zuordnung der Kennung einer Luftdruckkontrollvorrichtung (6a - 6d) zur Radposition in der Zentraleinheit (10).

5. Verfahren zur Durchführung der Zuordnung der Radposition zu Luftdruckkontrollvorrichtungen (6a - 6d) nach Anspruch 4, dadurch gekennzeichnet, daß an jedem Rad (2a - 2d) des Kraftfahrzeuges die Raddrehzahl bzw. eine Größe, aus der die Raddrehzahl herleitbar ist, von den ersten (16a- 16d) und den zweiten Meßvorrichtungen (4a - 4d) gemessen wird.

6. Verfahren zur Durchführung der Zuordnung der Radposition zu Luftdruckkontrollvorrichtungen nach Anspruch 4, dadurch gekennzeichnet, daß an jedem Rad (2a - 2d) des Kraftfahrzeuges die Geräuschentwicklung oder das Schwingungsverhalten oder die Reifentemperatur von den ersten (16a - 16d) und den zweiten Meßvorrichtungen (4a - 4d) gemessen wird.

7. Luftdruckkontrollsystem eines Kraftfahrzeuges, das u.a. über folgende Bestandteile verfügt:
- eine Anzahl von Rädern (2a - 2d), wobei jedem Rad (2a - 2d) eine Luftdruckkontrollvorrichtung (6a - 6d) zugeordnet ist, die zur Aussendung einer individuellen Kennung an eine Zentraleinheit (10) in der Lage ist
- eine Zentraleinheit (10), in der die Zuordnung der Kennung einer Luftdruckkontrollvorrichtung zur Radposition für jedes Rad gespeichert ist,
und das in einem Drucküberwachungsmodus und in einem Zuordnungsmodus betreibbar ist
dadurch gekennzeichnet, daß das Luftdruckkontrollsystem derart ausgebildet ist, daß
- vor oder bei der Inbetriebnahme des Kraftfahrzeuges der Zuordnungsmodus dem Drucküberwachungsmodus automatisch zuschaltbar ist und daß
- nach abgeschlossener Zuordnung der Zuordnungsmodus automatisch abschaltbar ist und das Luftdruckkontrollsystem ausschließlich in dem Drucküberwachungsmodus betreibbar ist.

8. Luftdruckkontrollsystem nach Anspruch 7, dadurch gekennzeichnet, daß das Luftdruckkontrollsystem darüber hinaus enthält:
- erste Meßvorrichtungen (16a - 16d), die jeweils einer Luftdruckkontrollvorrichtung (6a - 6d) eines Rades (2a - 2d) zugeordnet sind und die derart ausgebildet sind, daß mit ihnen eine Größe am jeweiligen Rad (2a - 2d) meßbar ist, die im Betrieb des Kraftfahrzeuges zumindest zeitweise einen charakteristischen Wert annimmt
- zweite Meßvorrichtungen (4a - 4d), die jeweils ortsfest an dem Kraftfahrzeug angebracht und jeweils einer Radposition (2a - 2d) des Kraftfahrzeuges zugeordnet sind, wobei die Zuordnung der zweiten Meßvorrichtungen (4a - 4d) zu den Radpositionen der Zentraleinheit (10) bekannt ist und wobei die zweiten Meßvorrichtungen (4a - 4d) derart ausgebildet sind, daß mit ihnen die gleiche Größe wie mit den ersten Meßvorrichtungen (16a - 16d) meßbar ist
- mindestens einen Empfänger (8a - 8d) und einen Übertragungsweg (12a - 12d), über den die von den ersten Meßvorrichtungen (16a - 16d) gemessenen Größen zusammen mit den individuellen Kennungen der Luftdruckkontrollvorrichtungen (6a - 6d) an die Zentraleinheit (10) übertragbar sind
- zweite Übertragungswege (14 a - 14d), auf denen die von den zweiten Meßvorrichtungen (4a - 4d) gemessenen Größe an die Zentraleinheit (10) übertragbar sind
- und daß die Zentraleinheit (10) derart ausgebildet ist, daß in ihr ein Vergleich zwischen den übertragenen Größen der ersten Meßvorrichtungen (16a - 16d) und den übertragenen Größen der zweiten Meßvorrichtungen (4a - 4d) durchführbar ist, wobei bei genügender Übereinstimmung der Meßwerte darauf geschlossen wird, daß die zusammen mit dem ersten Meßwert übermittelte Kennung zu der Radposition gehört, an der von der zweiten Meßvorrichtung (4a - 4d) der genügend übereinstimmende Meßwert gemessen wurde und daß die Zentraleinheit (10) Speicher enthält, in der die bestimmte Zuordnung der Kennung einer Luftdruckkontrollvorrichtung zur Radposition speicherbar ist.

9. Luftdruckkontrollsystem nach Anspruch 8, dadurch gekennzeichnet, daß die ersten Meßvorrichtungen (16a - 16d) die Raddrehzahl messen und die zweiten Meßvorrichtungen (4a - 4d) die einem Antiblockiersystem zugeordneten Raddrehzahlsensoren sind.

10. Luftdruckkontrollsystem nach Anspruch 9, dadurch gekennzeichnet, daß die ersten Meßvorrichtungen (16a - 16d) ein piezoelektrisches Element aufweisen, mit dessen Hilfe die Raddrehzahlen bestimmt werden.

## Claims

1. Method of accomplishing the association between the wheel position and air pressure monitoring devices (6a - 6d) in an air pressure monitoring system of an automotive vehicle, which system has, inter alia, the following component parts:
- a number of wheels (2a - 2d), each wheel (2a - 2d) having associated therewith an air pressure monitoring device (6a - 6d), which is capable of emitting an individual identification code to a central processing unit (10),
- a central processing unit (10), in which the association between the identification code of an air pressure monitoring device (6a - 6d) and the wheel position is stored for each wheel (2a - 2d),
wherein the association between the air pressure monitoring devices (6a - 6d) and the wheel positions is effected as follows:
- switch-on an association mode,
- emit the individual identification codes of the air pressure monitoring devices (6a - 6d),
- evaluate in the central processing unit (10) which individual identification code of which wheel position has been sent,
- store the determined associations in the central processing unit (10), and
- switch-off the association mode and operate the air pressure monitoring system in a pressure monitoring mode,
characterised in that
- the association mode is automatically switched to the pressure monitoring mode prior to or during the starting of the automotive vehicle,
- the association between the air pressure monitoring device and the wheel positions is effected during the operation of the automotive vehicle,
and in that
- the association mode is automatically left once the association has been concluded.

2. Method of accomplishing the association between the wheel position and air pressure monitoring devices (6a - 6d) according to claim 1, characterised in that the method is accomplished during each starting of the automotive vehicle.

3. Method of accomplishing the association between the wheel position and air pressure monitoring devices according to claim 1, characterised in that the method is accomplished whenever the automotive vehicle is stationary for longer than a prescribed period of time.

4. Method of accomplishing the association between the wheel position and air pressure monitoring devices (6a - 6d) according to one of claims 1 to 3, characterised in that the association between the air pressure monitoring devices (6a - 6d) and the wheel positions is accomplished as follows:
- measuring a parameter at each wheel of the automotive vehicle by means of first measuring devices (16a - 16d), which parameter assumes a characteristic value for each wheel of the automotive vehicle, at least with respect to time, each of the first measuring devices being associated with the corresponding air pressure monitoring device (6a - 6d) of the respective wheel (2a - 2d),
- measuring the same parameter at each wheel (2a - 2d) of the automotive vehicle by means of second measuring devices (4a - 4d), which are each secured in a fixed manner on the automotive vehicle and are associated with a wheel position (2a - 2d), the association between the second measuring devices (4a - 4d) and the wheel positions being known to the central processing unit (10),
- transmitting the parameters, measured by the first measuring devices (16a - 16d), together with the individual identification codes of the air pressure monitoring devices (6a - 6d), to the central processing unit (10),
- transmitting the values, measured by the second measuring devices (4a - 4d), to the central processing unit (10),
- comparing the values, measured by the first measuring devices (16a - 16d), with the values measured by the second measuring devices (4a - 4d), conclusions being drawn therefrom, when the measurement values are sufficiently identical, that the identification code, transmitted together with the first measurement value, belongs to the wheel position at which a measurement value has been measured by a second measuring device (4a - 4d), which value is sufficiently identical to that measured by a first measuring device (16a - 16d), and
- storing the association between the identification code of an air pressure monitoring device (6a - 6d) and the wheel position in the central processing unit (10).

5. Method of accomplishing the association between the wheel position and air pressure monitoring devioes (6a - 6d) according to claim 4, characterised in that the wheel rpm, or respectively a parameter from which the wheel rpm is derivable, is measured at each wheel (2a - 2d) of the automotive vehicle by the first measuring devices (16a - 16d) and by the second measuring devices (4a - 4d).

6. Method of accomplishing the association between the wheel position and air pressure monitoring devices according to claim 4, characterised in that the noise development or the vibratory behaviour or the tyre temperature is measured at each wheel (2a - 2d) of the automotive vehicle by the first measuring devices (16a - 16d) and by the second measuring devices (4a - 4d).

7. Air pressure monitoring system of an automotive vehicle, which system has, inter alia, the following component parts:
- a number of wheels (2a - 2d), each wheel (2a - 2d) having associated therewith an air pressure monitoring device (6a - 6d), which is capable of emitting an individual identification code to a central processing unit (10),
- a central processing unit (10), in which the association between the identification code of an air pressure monitoring device and the wheel position is stored for each wheel,
and which system is operable in a pressure monitoring mode and in an association mode,
characterised in that the air pressure monitoring system is configured in such a manner that
- the association mode is automatically switchable to the pressure monitoring mode prior to or during the starting of the automotive vehicle,
and in such a manner that
- the association mode can automatically be switched-off once the association has been concluded, and the air pressure monitoring system is exclusively operable in the pressure monitoring mode.

8. Air pressure monitoring system according to claim 7, characterised in that the air pressure monitoring system additionally contains:
- first measuring devices (16a - 16d), which are each associated with an air pressure monitoring device (6a - 6d) of a wheel (2a - 2d), and which are configured in such a manner that a parameter is measurable at the respective wheel (2a - 2d) by said first measuring devices, which parameter assumes a characteristic value during the operation of the automotive vehicle, at least with respect to time,
- second measuring devices (4a - 4d), which are each mounted in a fixed manner on the automotive vehicle and are each associated with a wheel position (2a - 2d) of the automotive vehicle, the association between the second measuring devices (4a - 4d) and the wheel positions being known to the central processing unit (10), and the second measuring devices (4a - 4d) being configured in such a manner that the same parameter is measurable by said second measuring devices as is measurable by the first measuring devices (16a - 16d),
- at least one receiver (8a - 8d) and one transmission path (12a - 12d), via which the parameters, measured by the first measuring devices (16a - 16d), together with the individual identification codes of the air pressure monitoring devices (6a - 6d), are transmittable to the central processing unit (10),
- second transmission paths (14a - 14d), along which the parameters, measured by the second measuring devices (4a - 4d), are transmittable to the central processing unit (10),
and in that
- the central processing unit (10) is configured in such a manner that a comparison between the transmitted parameters of the first measuring devices (16a - 16d) and the transmitted parameters of the second measuring devices (4a - 4d) is accomplishable in said unit, conclusions being drawn therefrom, when the measurement values are sufficiently identical, that the identification code, transmitted together with the first measurement value, belongs to the wheel position at which the sufficiently identical measurement value has been measured by the second measuring device (4a - 4d), and in such a manner that the central processing unit (10) contains storage means, in which the specific association between the identification code of an air pressure monitoring device and the wheel position is storable.

9. Air pressure monitoring system according to claim 8, characterised in that the first measuring devices (16a - 16d) measure the wheel rpm, and the second measuring devices (4a - 4d) are the wheel rpm sensors associated with an anti-lock braking system.

10. Air pressure monitoring system according to claim 9, characterised in that the first measuring devices (16a - 16d) include a piezoelectric element, by means of which the wheel rpms are determined.

## Revendications

1. Procédé pour opérer la correspondance entre les différentes roues et des dispositifs (6a, 6b) de surveillance de la pression des pneumatiques dans un système de surveillance de la pression des pneumatiques d'un véhicule à moteur qui comporte entre autres les composants suivants :
- un certain nombre de roues (2a - 2d), à chaque roue (2a - 2d) correspondant un dispositif (6a - 6d) de surveillance de la pression des pneumatiques qui peut envoyer à une unité centrale (10) un identificateur individuel
- une unité centrale (10) dans laquelle se mémorise, pour chaque roue (2a -2d), la correspondance entre l'identificateur d'un dispositif (6a - 6d) de surveillance de la pression des pneumatiques et la position des différentes roues,
dans le cas duquel il est procédé comme suit à la correspondance entre les dispositifs (6a - 6d) de surveillance de la pression des pneumatiques et la position des différentes roues :
- mise en circuit d'un mode correspondance,
- envoi des identificateurs individuels des dispositifs (6a - 6d) de surveillance de la pression des pneumatiques
- traitement dans l'unité centrale (10) pour savoir de laquelle des différentes roues provient chacun des identificateurs individuels
- mémorisation dans l'unité centrale (10) des correspondances ainsi déterminées
- mise hors circuit du mode correspondance et passage du système de surveillance de la pression des pneumatiques en mode surveillance de la pression
caractérisé par le fait
- qu'avant, ou lors de, la mise en route du véhicule à moteur le mode correspondance se substitue automatiquement au mode surveillance de la pression,
- que la correspondance entre le dispositif de surveillance de la pression des pneumatiques et des différentes roues se fait alors que le véhicule roule
- cette correspondance opérée, on quitte automatiquement le mode correspondance.

2. Procédé pour opérer la correspondance entre les différentes roues et les dispositifs (6a - 6d) de surveillance de la pression des pneumatiques selon la revendication 1, caractérisé par le fait que le procédé se met en oeuvre à chaque mise en route du véhicule à moteur.

3. Procédé pour opérer la correspondance entre les différentes roues et les dispositifs de surveillance de la pression des pneumatiques selon la revendication 1, caractérisé par le fait que le procédé se met toujours en oeuvre dès que le véhicule à moteur s'arrête plus longtemps qu'un temps prescrit.

4. Procédé pour opérer la correspondance entre les différentes roues et des dispositifs (6a - 6d) de surveillance de la pression des pneumatiques selon l'une des revendications 1 à 3, caractérisé par le fait que la correspondance entre les dispositifs (6a - 6d) de surveillance de la pression des pneumatiques et les différentes roues s'effectue comme suit :
- mesure, sur chaque roue du véhicule, d'une grandeur qui prend, au moins par intermittences, pour chaque roue du véhicule, une valeur caractéristique, au moyen de premiers dispositifs de mesure (16a - 16d) dont chacun correspond au dispositif (6a - 6d) correspondant de surveillance de la pression des pneumatiques de la roue en question (2a - 2d)
- mesure de la même grandeur sur chaque roue (2a - 2d) du véhicule au moyen de deuxièmes dispositifs de mesure (4a - 4d) qui sont chacun fixés sur le véhicule, chacun fixe en position et correspondant à l'une des roues (2a - 2d), la correspondance entre les deuxièmes dispositifs de mesure (4a - 4d) et les différentes roues étant connue de l'unité centrale (10),
- transmission à l'unité centrale (10) des valeurs mesurées par les premiers dispositifs de mesure (16a -16 d) ainsi que des identificateurs individuels des dispositifs (6a - 6d) de surveillance de la pression des pneumatiques,
- transmission à l'unité centrale (10) des valeurs mesurées par les deuxièmes dispositifs de mesure (4a - 4d),
- comparaison des valeurs mesurées par les premiers dispositifs de mesure (16a -16 d) avec les valeurs mesurées par les deuxièmes dispositifs de mesure (4a - 4d), étant précisé qu'en cas de coïncidence satisfaisante des valeurs de mesure, il est conclu que l'identificateur transmis avec la première valeur de mesure appartient à la roue sur laquelle un deuxième dispositif de mesure (4a - 4d) a mesuré une valeur de mesure présentant une coïncidence satisfaisante avec celle mesurée par un premier dispositif de mesure (16a -16 d),
- mémorisation, dans l'unité centrale (10), de la correspondance entre l'identificateur d'un dispositif (6a - 6d) de surveillance de la pression des pneumatiques et la roue correspondante.

5. Procédé pour opérer la correspondance entre les différentes roues et des dispositifs (6a - 6d) de surveillance de la pression des pneumatiques selon la revendication 4, caractérisé par le fait que sur chaque roue (2a - 2d) du véhicule est mesurée par les premiers (16a -16 d) et par les deuxièmes (4a - 4d) dispositifs de mesure, la vitesse de rotation de la roue ou une grandeur dont on peut déduire cette vitesse de rotation.

6. Procédé pour opérer la correspondance entre les différentes roues et les dispositifs de surveillance de la pression des pneumatiques selon la revendication 4, caractérisé par le fait que sur chaque roue (2a - 2d) du véhicule est mesuré par les premiers (16a -16 d) et les deuxièmes (4a - 4d) dispositifs de mesure le développement de bruit ou le comportement en vibration ou la température du pneumatique.

7. Système de surveillance de la pression des pneumatiques d'un véhicule à moteur, comportant entre autres les composants suivants :
- un certain nombre de roues (2a - 2d), à chaque roue (2a - 2d) correspondant un dispositif (6a - 6d) de surveillance de la pression des pneumatiques qui peut envoyer à une unité centrale (10) un identificateur individuel
- une unité centrale (10) dans laquelle se mémorise, pour chaque roue, la correspondance entre l'identificateur d'un dispositif (6a - 6d) de surveillance de la pression des pneumatiques et la position des différentes roues
- le système pouvant fonctionner en mode surveillance de la pression et en mode correspondance,
caractérisé par le fait que le système de surveillance de la pression des pneumatiques est conçu de façon
- qu'avant, ou lors de, la mise en route du véhicule, le mode correspondance peut se substituer automatiquement au mode surveillance de la pression et
- que, cette correspondance opérée, le mode correspondance peut se mettre automatiquement hors circuit et le système de surveillance de la pression des pneumatiques fonctionner exclusivement en mode surveillance de la pression.

8. Système de surveillance de la pression des pneumatiques selon la revendication 7, caractérisé par le fait que le système de surveillance de la pression des pneumatiques comporte en outre
- des premiers dispositifs de mesure (16a -16d) dont chacun correspond à un dispositif (6a - 6d) de surveillance de la pression des pneumatiques d'une roue (2a - 2d) et qui sont conçus de façon qu'avec eux puisse se mesurer sur la roue correspondante (2a - 2d) une grandeur qui, alors que le véhicule roule, prend au moins par intermittences une valeur caractéristique
- des deuxièmes dispositifs de mesure (4a - 4d) qui sont chacun rapportés, fixes en position, sur le véhicule et dont chacun correspond à l'une des roues (2a - 2d) du véhicule, la correspondance entre les deuxièmes dispositifs de mesure (4a - 4d) et les différentes roues étant connue de l'unité centrale (10) et les deuxièmes dispositifs de mesure (4a - 4d) étant conçus de façon qu'avec eux puisse se mesurer la même grandeur que celle mesurée par les premiers dispositifs de mesure (16a - 16d)
- au moins un récepteur (8a - 8d) et un chemin de transmission (12a - 12d) au moyen desquels peuvent être transmis à l'unité centrale (10) les grandeurs mesurées par les premiers dispositifs de mesure (16a - 16d) ainsi que les différents identificateurs des dispositifs (6a - 6d) de surveillance de la pression des pneumatiques,
- des deuxièmes chemins de transmission (14a - 14d), sur lesquels peuvent être transmises à l'unité centrale (10) les grandeurs mesurées par les deuxièmes dispositifs de mesure (4a - 4d)
- et par le fait que l'unité centrale (10) est conçue de façon que puisse y être effectuée une comparaison entre les grandeurs transmises par les premiers dispositifs de mesure (16a - 16d) et les grandeurs transmises par les deuxièmes dispositifs de mesure (4a - 4d), étant précisé qu'en cas de coïncidence suffisante des valeurs de mesure il est conclu que l'identificateur transmis avec la première valeur de mesure appartient à la roue sur laquelle le deuxième dispositif de mesure (4a - 4d) a mesuré la valeur de mesure présentant une coïncidence suffisante, et par le fait que l'unité centrale (10) contient une mémoire dans laquelle peut se mémoriser la correspondance ainsi déterminée entre l'identificateur d'un dispositif de surveillance des pneumatiques et l'une des roues.

9. Système de surveillance de la pression des pneumatiques selon la revendication 8, caractérisé par le fait que les premiers dispositifs de mesure (16a - 16d) mesurent la vitesse de rotation des roues et que les deuxièmes dispositifs de mesure (4a - 4d) sont les détecteurs de la vitesse de rotation des roues associés à un système anti-blocage.

10. Système de surveillance de la pression des pneumatiques selon la revendication 9, caractérisé par le fait que les premiers dispositifs de mesure (16a - 16d) présentent un élément piezoélectrique à l'aide duquel sont déterminées les vitesses de rotation des roues.
